# EUROPÄISCHE PATENTANMELDUNG

(11) **EP 1 092 370 A1**
(43) Veröffentlichungstag der Anmeldung: **18.04.2001**
(21) Anmeldenummer: 00117801.1
(22) Anmeldetag: 18.08.2000
(51) Int. Cl.: A47B 96/20

(54) **Beschichtete Platte für ein Küchen- oder Badmöbel**

(30) Priorität: 14.10.1999 DE 29918102 U
(71) Anmelder: Rational Einbauküchen GmbH, 49328 Melle (DE)
(72) Erfinder: Bleidorn, Gerd, 33428 Harsewinkel (DE)
(74) Vertreter: Loesenbeck, Karl-Otto, Dipl.-Ing.

(57) **Zusammenfassung**

Eine beschichtete Platte für ein Küchen- oder Badmöbel ist so ausgebildet, daß die Beschichtung auf ihrer Sichtseite nahezu adhäsionskraftfrei ist.

## Beschreibung

Die vorliegende Erfindung betrifft eine beschichtete Platte für ein Küchen- oder Badmöbel.

Sowohl zum Oberflächenschutz als auch zu dekorativen Zwecken werden bspw. Platten mit einem Lack beschichtet.

Dabei unterliegt dieser Lack einer besonderen Beanspruchung durch Wrasen, Fettspritzer oder sonstige, typische Verschmutzungen. Im Badbereich durch Make up-, Zahnpasta-Reste o.dgl.
Diese sind teilweise nur mit einem erheblichen Arbeitsaufwand unter Zuhilfenahme von chemischen Reinigungsmitteln entfernbar. In jedem Fall wird der Lack durch die mechanische Beanspruchung beim Reinigen, z.B. durch Kratzen, Schleifen und/oder die zum Teil aggressiven Reinigungsmittel zumindest angegriffen, vielfach sogar in der Form beschädigt, als die zuvor glänzende Oberfläche mit der Zeit matt wird.

Dies trifft gleichermaßen für Beschichtungen zu, die als Folien aufgebracht sind.

Dabei können sowohl Front- wie auch Korpusplatten oder Arbeitsplatten entsprechend beschichtet sein.

Der vorliegenden Erfindung liegt daher die Aufgabe zugrunde, eine Platte der gattungsgemäßen Art so auszubilden, daß sie einfach und gründlich ohne nennenswerte mechanische oder chemische Maßnahmen zu reinigen ist.

Diese Aufgabe wird durch eine Platte gelöst, die die Merkmale des Anspruches 1 aufweist.

Durch die weitgehend adhäsionskraftfreie Beschichtung, die in Form eines Lackes, einer Folie oder sonstigen Beschichtung aufgebracht ist, kann eine trotzdem anhaftende Verschmutzung sehr leicht entfernt werden.

Hierdurch ergeben sich erhebliche Vorteile, die vor allem darin bestehen, daß eine Reinigung ohne mechanische Beanspruchung der Oberflächen und ohne Einsatz chemischer Reinigungsmittel möglich ist.
Daneben kommt dem geringeren Arbeitsaufwand eine besondere Bedeutung zu, da bislang die Reinigungsarbeiten mühsam und für die im Regelfall Hausfrau körperlich anstrengend sind.

Wie erwähnt, kann die Beschichtung aus einem Lack bestehen, der farbig oder transparent ist und im letzteren Fall auf eine furnierte, farbig vorlackierte oder aus Massivholz bestehende Platte aufgetragen wird.

Vorstellbar ist aber auch, metallische, kunststoff- oder melaminharzbeschichtete Platten mit einem entsprechenden Lack zu beschichten. Aber auch andere Trägermaterialien bzw. Untergründe sind denkbar.

Desweiteren besteht die Möglichkeit, die Sichtseite einer auf eine Trägerplatte aufzubringenden Folie entsprechend der Erfindung nahezu adhäsionskraftfrei auszubilden, so daß eine weitere Bearbeitung durch Lackieren oder dergleichen nicht mehr erforderlich ist.

Als Lacke oder Folien sind solche geeignet, die auf Polyurethan- oder Acrylat-Basis mit sogenannten Antigraffiti-Eigenschaften ausgestattet sind, wobei diese Lacke oder Folien eine extrem glatte Oberfläche mit schmutzabweisenden Eigenschaften besitzen.

Auch kann die Beschichtung aus einem unter dem Begriff 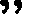 Nano-Lack" oder einer 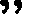 Nano-Folie" bestehen, die über einen sogenannten Lotusblüten-Effekt verfügen und deren Oberflächenbeschaffenheit so ist, daß im wesentlichen kein Schmutz anhaften kann.

Ferner besteht die Möglichkeit die Beschichtung aus einer unpolaren Kunststoffolie herzustellen, die aufgrund ihrer molekularen Beschaffenheit nahezu adhäsionskraftfrei ist und die sich ebenfalls für eine erfindungsgemäße Beschichtung eignet.

## Patentansprüche

1. Beschichtete Platte für ein Küchen- oder Badmöbel, **dadurch gekennzeichnet, daß** die Beschichtung auf ihrer Sichtseite nahezu adhäsionskraftfrei ist.

2. Platte nach Anspruch 2, **dadurch gekennzeichnet, daß** die Beschichtung aus einem Antigraffiti-Lack oder einer Antigrafitti-Folie besteht auf einer Polyurethan- oder Acrylat-Basis.

3. Platte nach Anspruch 2, **dadurch gekennzeichnet, daß** die Beschichtung aus einem sogenannten 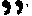 Nano-Lack" oder einer 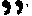 Nano-Folie" besteht.

4. Platte nach Anspruch 1, **dadurch gekennzeichnet, daß** die Beschichtung aus einer unpolaren Kunststoffolie besteht.
